# EUROPEAN PATENT APPLICATION

(11) **EP 3 309 019 A1**
(43) Date of publication of application: **18.04.2018**
(21) Application number: 16382465.9
(22) Date of filing: 13.10.2016
(51) Int. Cl.: B60S 1/52, B60S 1/56, B60S 1/60

(54) **WASHING SYSTEM**

(71) Applicant: FICO TRANSPAR, S.A., 08028 Barcelona (ES)
(72) Inventor: MOTA LÓPEZ, Miguel, 08232 VILADECAVALLS (ES); ALCAIDE HERNÁNDEZ, Olallo, 08232 VILADECAVALLS (ES)
(74) Representative: ZBM Patents - Zea, Barlocci & Markvardsen

(57) **Abstract**

The washing system (100) is intended for washing a surface (210). It comprised at least two fluid-ejection devices (110, 120) adapted to discharge fluid out of the device into said surface (210). The fluid-ejection devices (110, 120) are positioned relative to each other such that a turbulence effect is created when fluid is discharged out of said fluid-ejection devices (110, 120) towards the surface (210) being washed. The fluid-ejection devices (110, 120) are positioned, e.g. opposite each other, such that fluid discharged encounter with adjacent areas in the surface (210) being washed.

## Description

A washing system is disclosed herein for washing a surface of a part such as for example a motor vehicle part. The washing system is of the type comprising two or more fluid-ejection devices adapted to discharge a fluid such as a suitable washing fluid into a surface of a motor vehicle or a part thereof. Many other applications are also envisaged.

### BACKGROUND

Washing systems are known in the art for washing surfaces of motor vehicle parts such as for example motor vehicle headlights, lenses, sensors, etc. However, in known washing systems the target surfaces often can not be washed properly due for example to complex surfaces to be washed, objects standing in the path of the fluid ejected into the surface to be washed, etc.

Orientable nozzles and telescopic nozzle assemblies have been proposed in the art for addressing the above problems.

One example of orientable nozzle washing device is disclosed for example in document EP1564095 where a cleaning liquid is fed such that a number of separate flows are discharged a through radial slit or holes in a sprayer body.

Examples of telescopic nozzle washing devices are disclosed in documents EP1694541, EP1506109 and FR3021014. In general, they comprise a hollow cylinder, and a piston arranged to slide inside the hollow cylinder against a spring as it is driven by a cleaning liquid that is fed therewithin. The cleaning liquid is discharged out of the washing device through a nozzle that is connected to the piston when the piston is completely telescoped.

Such orientable and telescopic nozzles have been shown not to be as effective as desired in many cases particularly when external parts or accessories are present in the path of the liquid being ejected or when the geometry of the part to be washed is complex. As a result, said areas or parts can not be reached or they are partially reached and therefore they can not be washed adequately or as desired. In addition, said known telescopic devices have been found to be undesirably complex.

There is still a need for efficient fluid-ejection devices to be used for washing surfaces of parts in motor vehicles and other applications while they are simple in structure as well as cost effective in manufacturing.

### SUMMARY

The objective of the present washing system is to at least reduce the above disadvantages while providing a number of significant advantages.

The washing system is intended for washing a surface, such as for example a part of a motor vehicle. Examples of parts of a motor vehicle where the present washing system can be applied are headlamps, vehicle bodywork, bumpers, number plates, sensor covers, camera lenses, camera covers, etc. in motor vehicles. The parts where the present washing system can be applied are not limited to the above and could of course be applied to other parts of a vehicle or parts of other objects as well.

At least two fluid-ejection devices are provided in the present washing system. Said at least two fluid-ejection devices is adapted to discharge fluid out of the device into said part to be washed, flushed, rinsed, etc. The fluid may be, for example, a cleaning or washing liquid although many other suitable fluids are also possible such as a washing gas, a combination of washing liquids, a combination of washing gases, a combination of washing liquid (or liquids) and gas (or gases) etc. Other fluids and combinations of fluids are also possible.

The above mentioned at least two fluid-ejection devices are positioned relative to each other such that a turbulence effect is created when fluid is discharged out of said at least two fluid-ejection devices towards the surface of the part being washed. As a result of the turbulence effect created by the particular relative position and orientation of multiple fluid-ejection devices, it has been found that a highly optimized washing is achieved since dirt can be removed more easily. Larger surfaces can be washed efficiently with the same number of fluid-ejection devices as in known prior art devices.

The above turbulence effect is created when fluid is discharged out of said at least two fluid-ejection devices towards the surface of the part to be washed.

Preferably, the turbulence effect is created when fluid streams are discharged from fluid-ejection devices impinging on a surface of a part to be washed, such as a part of a motor vehicle. As a result of this, fluid streams break up such that fluids become atomized, that is, they are converted into fine particles or droplets which has been found to remove dirt more efficiently and to wash larger surfaces with the same number or fluid-ejection devices as in the prior art.

One or more of the following parameters associated with the configuration of the fluid-ejection devices may be preferred so as to create a suitable turbulence effect in order to obtain an optimum washing operation:
- one or more of the fluid-ejection devices of the present washing system may be configured to provide a fluid discharge pressure from about 1 to about 12 bar, and more preferably from about 1 to about 8 bar;
- one or more of the fluid-ejection devices of the present washing system may be configured to provide a fluid flow velocity from about 5 m/s to about 20 m/s, and more preferably from 10 m/s to about 15 m/s;
- one or more of the fluid-ejection devices of the present washing system may be arranged such that the respective fluid discharges impact on corresponding areas of said part separated by a span or distance from about 0 to about 100 mm; and more preferably from about 20 to about 60 mm; and
- fluid-ejection devices may be arranged such that fluid is discharged into the surface of the part to be washed at an angle from about 10° to about 45° relative to the horizontal.

As explained above, at least two fluid-ejection devices are positioned such that fluid discharged out therefrom encounter with adjacent areas in the surface of the part being washed. Turbulence effect is thus created when fluid discharged out from the fluid-ejection devices encounter with such adjacent areas in the surface of the part being washed. For this purpose, it may be preferred that at least two of said fluid-ejection devices are arranged at least substantially opposite each other. Other arrangements for the fluid-ejection devices in the present washing system are also possible.

The fluid-ejection devices in the present washing system are provided with nozzles adapted to suitably discharge fluid out of the device. The nozzles may be formed integral with the movable member or they may be a separate part attached to the movable member.

A number of fluid-ejection devices may be provided configured such that at least two of them provide fluid streams or discharges having different characteristics. For example, one or more fluid-ejection devices may be adapted to discharge fluid according to a solid stream, for promoting stability such as against wind when the vehicle is running, etc., and one or more other one fluid-ejection devices may be adapted to discharge fluid according to a fan stream, for reaching greater areas and increasing the turbulence effect, due to the increased contact area between opposing fluid streams. The fan stream supplied by the fluid-ejection devices may cover, for example, an angle from about 20 to about 45° although it may be any other fan angles depending on the application to which the device is directed and the position of the nozzle.

As a result, the present washing system may be adapted or adjusted according to any type of dirt in surfaces of parts in motor vehicles, such as headlights, sensors, sensor covers, camera lenses, camera covers, bumpers, etc. One fluid-ejection device may be adapted or configured to eject or discharge fluid according to different ejection modes such as the above mentioned solid stream, fan stream, combinations thereof, etc.

In some cases it may be preferred that at least one of the fluid-ejection devices can be operated as desired by the user for performing a washing operation, that is, it is the user who decides when a washing operation is to be performed. However, in other cases, at least one of the fluid-ejection devices can be operated automatically when an admissible dirt level on the surface of the part of the motor vehicle is exceeded, that is, the device may be self-operated.

It may be preferred that one or more of the fluid-ejection devices comprises a fixed member and movable member. The fixed member may be adapted to be connected to a source of pressurized fluid. The movable member may be arranged such that it can be moved relative to the fixed member when it is driven by the fluid that is supplied by the source of pressurized fluid. Other types of fluid-ejection devices may be of course envisaged such as those of the fixed type or even those of the above mentioned telescopic type in which fluid is discharged at any time, at a given time or at a given position of the movable member relative to the fixed member. Telescopic type fluid-ejection devices may be also envisaged where fluid is discharged during the stroke displacement of the movable member relative to the fixed member.

The nozzles of the fluid-ejection devices may the same or they may be different to each other, that is, they may be configured to provided fluid streams having the same or different characteristics to each other. For example, the nozzles in some or all the fluid-ejection devices could be adapted to eject fluid according to a solid stream and the nozzles in some or all the fluid-ejection devices could be adapted to eject fluid according to a fan stream.

The fluid-ejection devices in the washing system could be arranged as required at different positions, such as horizontal, vertical, inclined, etc. in different areas of the surface to be washed taking into consideration its location, considering whether it will be under aerodynamic forces or not, etc. so to provide a turbulence effect resulting in that dirt is dislodged more easily from the surface being washed by the present device.

Additional objects, advantages and features of examples of the present washing system will become apparent to those skilled in the art upon examination of the description, or may be learned by practice thereof.

### BRIEF DESCRIPTION OF THE DRAWINGS

Particular embodiments of the present washing system will be described in the following by way of non-limiting examples. The following description of examples is given with reference to the appended drawings.

In the drawings:
Figure 1 is a perspective view of one example of a washing system according to the present disclosure where the fluid-ejection devices are adapted to discharge fluid according to a fan stream into a surface of a vehicle sensor cover;
Figure 2 is a perspective view of one example of a washing system according to the present disclosure where the fluid-ejection devices are adapted to discharge fluid according to a solid stream into a surface of a vehicle sensor cover;
Figure 3 is a perspective view of one example of a washing system according to the present disclosure where the fluid-ejection devices are adapted to discharge fluid according to combined fan stream-solid stream into a surface of a vehicle sensor cover;
Figure 4 is an elevational view of the washing system according to figure 1; and
Figure 5 is top view of the washing system according to figures 1 and 4.

### DETAILED DESCRIPTION OF EXAMPLES

In the specific examples shown in the drawings, the washing system 100 is configured for washing a surface 210 of a vehicle sensor cover 200 or a part thereof. Other parts which the present washing system 100 may be applied to are also possible, such as vehicle bodywork, bumpers, number plates, sensors, sensor covers, and parts and combination thereof, etc.

The washing system 100 shown in the figures has two fluid-ejection devices 110, 120. A different number of fluid-ejection devices 110, 120 can be used as required. The fluid-ejection devices 110, 120 are adapted to discharge a cleaning or washing liquid on the surface 210 of the vehicle sensor cover 200. If required, the fluid-ejection devices 110, 120 are adapted to discharge a cleaning or washing gas, a combination of washing liquids, a combination of washing gases, a combination of washing liquid or liquids and gas or gases, etc. Other fluids and combinations of fluids are also possible.

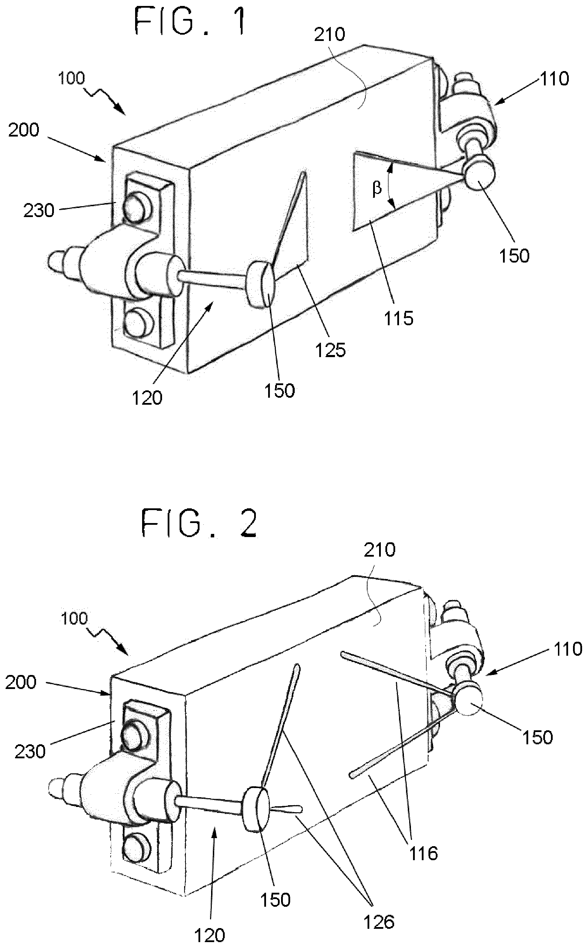

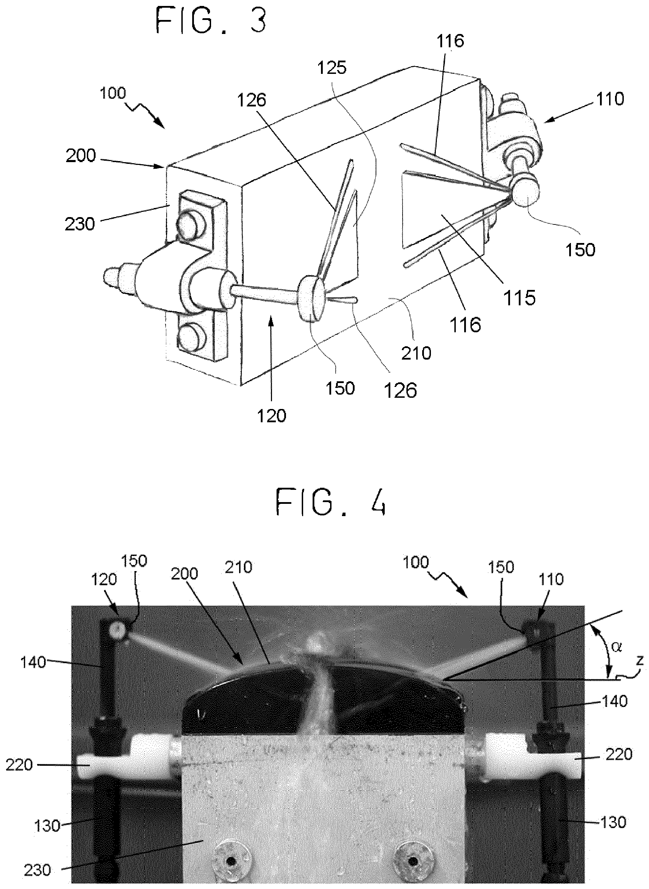

In the examples shown in figures 1-3, the fluid-ejection devices 110, 120 are arranged in a substantially horizontal position. Other different arrangements for the fluid-ejection devices 110, 120 are possible such as vertical as shown in the example of figure 4, inclined, etc., in different areas of the surface 210 of the vehicle sensor cover 200 that is to be washed. Different fluid-ejection devices 110, 120 could be arranged in different positions to each other in the same part to be washed.

The fluid-ejection devices 110, 120 are attached to the sensor cover 200 through an attaching portion 220. In other examples, fluid-ejection devices 110, 120 could be attached to the vehicle or part thereof. The attaching portion 220 may provide a fixed attachment such that the fluid-ejection devices 110, 120 can no be moved relative to the sensor cover 200. If required, such attaching portion 220 may provide a movable attachment such that the fluid-ejection devices 110, 120 can be moved relative to the sensor cover 200 to that they can be rotated or inclined. One or more attaching portions 220 may provide a fixed attachment while other attaching portions 220 may provide a movable attachment in the same washing system 100 in the same sensor cover 200. The attaching portions 220 may be part of a sensor cover body 230 or they may be part of an element associated therewith.

In the examples shown in the figures, each fluid-ejection device 110, 120 consists of a fixed member 130 and a movable member 140. The fixed member 130 is formed integral with or it is attached to one of the above mentioned attaching portions 220. The fixed member 130 is adapted to be connected to a source of pressurized washing liquid, not shown in the drawings. The movable member 140 can be moved, i.e. telescoped, relative to the fixed member 130 as the washing liquid is supplied.

In use, during a first stroke of the movable member 140 no discharge of washing liquid is allowed out of the fluid-ejection devices 110, 120, and during a second stroke of the movable member 140 washing liquid is allowed out of the fluid-ejection devices 110, 120. A sweeping effect is thus advantageously achieved resulting in a very efficient washing operation.

In the present example, the fluid-ejection devices 110, 120 each include a nozzle 150. The nozzle 150 of the fluid-ejection devices 110, 120 is adapted to discharge washing liquid such that the above mentioned turbulence effect is created for an optimum washing operation of the vehicle sensor cover 200 in the example shown. For this purpose, the nozzle 150 of the fluid-ejection devices 110, 120 is configured so as to provide a fluid discharge pressure of 1-8 bar at a fluid flow velocity of about 10-15 m/s. Also, the nozzle 150 of the fluid-ejection devices 110, 120 is configured such that fluid streams impinge on corresponding areas of the vehicle sensor cover 200 separated by a distance of 20-60 mm. In the example shown, the fluid-ejection devices 110, 120 are configured for discharging fluid streams at an angle α of about 10-45° to a horizontal axis z as shown in figure 4.

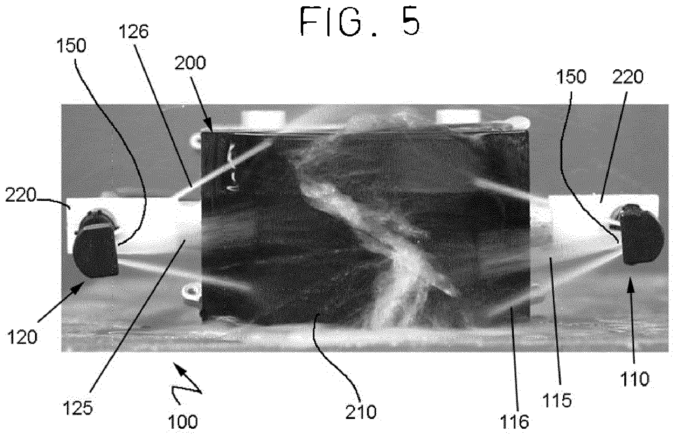

The fluid-ejection devices 110, 120 are arranged opposite each other such that as the washing liquid is discharged out therefrom, washing liquid streams 115, 116, 125, 126 impinge on adjacent areas of the surface 210 of the vehicle sensor cover 200 such that the washing liquid streams 115, 116, 125, 126 break up. When this occurs, washing liquids become atomized producing the above mentioned turbulence effect, which has been found to be highly advantageous in removing dirt in larger surfaces such as from the vehicle sensor cover 200. In this respect, as shown in figure 5 of the drawings, areas difficult to reach such as corners in the sensor cover 200 are reached efficiently by the fluid-ejection devices 110, 120 without requiring the supply of specific fluid streams directed to that areas.

In the example shown in figure 1 of the drawings, the fluid-ejection devices 110, 120 are configured to supply fluid streams or discharges according to a fan stream 115, 125 respectively. The fan stream 115, 125 may for example cover an angle β of about 20-45°, as shown in figure 1.

In the example shown in figure 2 of the drawings, the fluid-ejection devices 110, 120 may be configured to provide a fluid discharge according to a solid stream 116, 126 respectively. Still in the example shown in figure 3 of the drawings, the fluid-ejection devices 110, 120 may be configured to provide a fluid discharge according to a combined solid-fan stream, that is, a fan type stream 115, 125 supplied between two divergent solid streams 116, 126.

Although only a number of particular embodiments and examples of the present washing system have been disclosed herein, it will be understood by those skilled in the art that other alternative examples and/or uses and obvious modifications and equivalents thereof are possible. Furthermore, the present disclosure covers all possible combinations of the particular examples described. The scope of the present disclosure should not be limited by particular examples, but should be determined only by a fair reading of the claims that follow.

Reference signs related to drawings and placed in parentheses in a claim, are solely for attempting to increase the intelligibility of the claim, and shall not be construed as limiting the scope of the claim.

## Claims

1. A washing system (100) for washing a surface (210), the system (100) comprising at least two fluid-ejection devices (110, 120) each adapted to discharge fluid out of the device into said surface (210), wherein the fluid-ejection devices (110, 120) are positioned relative to each other such that a turbulence effect is created when fluid is discharged out of said at least two fluid-ejection devices (110, 120) towards the surface (210) being washed.

2. The system (100) of claim 1, wherein at least two fluid-ejection devices (110, 120) are positioned such that fluid discharged out therefrom encounter with adjacent areas in the surface (210) being washed.

3. The system (100) of claim 1 or claim 2, wherein at least two of said fluid-ejection devices (110, 120) are arranged at least substantially opposite each other.

4. The system (100) of any of the preceding claims, wherein at least one of said fluid-ejection devices (110, 120) is arranged such that fluid is discharged into the surface (210) at an angle (α) ranging from about 10° to about 45° from the horizontal.

5. The system (100) of any of the preceding claims, wherein at least two of the fluid-ejection devices (110, 120) provide fluid discharges having different characteristics.

6. The system (100) of claim 5, wherein at least one fluid-ejection device is adapted to discharge fluid according to a solid stream and at least one fluid-ejection device is adapted to discharge fluid according to a fan stream.

7. The system (100) of claim 6, wherein said fan stream covers an angle (β) from about 20 to about 45°.

8. The system (100) of any of the preceding claims, wherein at least one of the fluid-ejection devices (110, 120) can be operated as desired by the user for performing a washing operation on the surface (210).

9. The system (100) of any of the preceding claims, wherein at least one of the fluid-ejection devices (110, 120) can be operated automatically when an admissible dirt level on the surface (210) is exceeded.

10. The system (100) of any of the preceding claims, wherein at least one of the fluid-ejection devices (110, 120) is configured to provide a fluid discharge pressure from about 1 to about 12 bar so as to create a suitable turbulence effect.

11. The system (100) of any of the preceding claims, wherein at least one of the fluid-ejection devices (110, 120) is configured to provide a fluid flow velocity from about 5 m/s to about 20 m/s so as to create a suitable turbulence effect.

12. The system (100) of claim 11, wherein at least one of the fluid-ejection devices (110, 120) is configured to provide a fluid flow velocity from about 10 m/s to about 15 m/s so as to create a suitable turbulence effect.

13. The system (100) of any of the preceding claims, wherein at least two fluid-ejection devices (110, 120) are arranged such that the respective fluid discharges impact on corresponding areas of said surface (210) separated by a distance from about 0 to about 100 mm so as to create a suitable turbulence effect.

14. The system (100) of claim 13, wherein at least two fluid-ejection devices (100) are arranged such that the respective fluid discharges impact on corresponding areas of said surface (210) separated by a distance from about 20 to about 60 mm so as to create a suitable turbulence effect.

15. The system (100) of any of the preceding claims, wherein the surface (210) is a part (200) of a motor vehicle.
